## Europäisches Patentamt
## European Patent Office
## Office européen des brevets

(11) Publication number: **0 035 647**
**B1**

(12) **EUROPEAN PATENT SPECIFICATION**

(45) Date of publication of patent specification: **31.10.84**

(51) Int. Cl.³: **G 06 F 9/38, G 06 F 15/16**

(21) Application number: **81100813.5**

(22) Date of filing: **05.02.81**

(54) A SIMD data processing system.

(30) Priority: **10.03.80 US 129148**

(43) Date of publication of application:
**16.09.81 Bulletin 81/37**

(45) Publication of the grant of the patent:
**31.10.84 Bulletin 84/44**

(84) Designated Contracting States:
**DE FR GB IT**

(56) References cited:
**US-A-4 149 243**

**PROCEEDINGS OF THE NATIONAL COMPUTER
CONFERENCE, N.Y. June 7-10, 1976, AFIPS,
vol. 45, Montvale, NUTT: "A Parallel processor
for evaluation studies", pages 769-775
INTRODUCTION TO COMPUTER
ARCHITECTURE, SRA. Inc. 1975, Chicago, US**

(73) Proprietor: **International Business Machines
Corporation
Old Orchard Road
Armonk, N.Y. 10504 (US)**

(72) Inventor: **Strong, Hovey Raymond, Jr.
1122 Silver Oak Ct.
San Jose California 95120 (US)**
Inventor: **Lorie, Raymond Amand
7028 Brooktree Way
San Jose California 95120 (US)**

(74) Representative: **Lewis, Alan John
IBM United Kingdom Patent Operations Hursley
Park
Winchester, Hants, S021 2JN (GB)**

Courier Press, Leamington Spa, England.

## Description

This invention relates to a SIMD data processing system.

SIMD (single instruction multiple data) parallel processors include a programmable control unit; a plurality of registers for storing counterpart vectors; mask registers; and means responsive to a sequence of one or more control unit instructions for concurrently operating upon data in the registers. Such machines may also be described as consisting of a programmable control unit driving an array of n parallel processors, each processor having a memory, arithmetic unit, program decode, and input/output (I/O) portions thereof. Such an array computer is described in U.S. Patent No. 3,537,074.

Examples of data processing performable on such machines is described in IBM Technical Disclosure Bulletin, Volume 22, No. 6, pages 2489—2492, November 1979. These include parallel table-directed translations and the performance of selected vector operations on elements determined by masks associated with the modification of linked lists. Other applications, such as numerical weather prediction, lend themselves to the matrix-oriented processing available on such machines.

In SIMD machines, each linearly ordered program sequence, is called a basic block. Each basic block consists of a set of contiguous instructions uninterrupted by branches and targets except at its end points. The flow of control of these basic blocks may be modelled as a directed binary flowgraph.

In the proceedings of the National Computer Conference, New York, June 7—10, 1976 published by the American Federation of Information Processing Society, Volume 45, pages 769 to 775, a single-instruction-stream, multiple-data-stream, (SIMD) parallel computer is described by Gary J. Nutt. The computer comprises an array of parallel processors and a control unit therefor. The control unit schedules the execution sequence of the instruction stream and comprises an instruction decode unit to interpret the instructions and to broadcast the interpreted instructions to the processors for execution. Each processor includes a key bit register, a mask register and a select register the contents of which signify the active or inactive status of the processor and are updated as necessary.

The Nutt SIMD computer comprises a multiplicity of processors and each of the processors may be controlled from time to time by any one of the control units. The operative control unit broadcasts its instruction to all the processors and, from the contents of its key, mask, and select registers the relevant processor(s) identifies its instructions. The Nutt computer does not handle conditional branch instructions in the processors but in the control unit (of page 770, 2nd col., 4th passage).

In SRA's text book entitled Introduction to Computer Architecture, published in 1975, conditional branching in SIMD computers is discussed on pages 333 to 338. According to that article the SIMD computer executes both branches, the processors not required for one branch being deactivated during performance of that branch and those not required for the other branch being deactivated during performance of that other branch. This is implemented by a masking technique using a 1-bit register in each processor. If the register contains a 1 the processor is active and if 0 the processor is deactivated.

The Applicants have appreciated that there is a need for a substantial improvement in the handling of branch instructions by the processors in an SIMD computer. In particular there is a need to ensure that as many operations are carried out in parallel as possible and to schedule instruction execution so that the processing time is made as short as possible.

The Applicants have further appreciated that these needs can be met by scheduling the computer instructions according to an assigned priority order. Accordingly the invention provides data processor apparatus comprising an array of parallel processors and a control unit therefore; said control unit being operable to schedule the sequence of execution of a program of basic blocks of instructions each block having a priority value assigned to it and comprising a linearly ordered sequence of instructions, to interpret the instructions and to start execution of a basic block of instructions on the processors of the array; and each processor including an execution status register adapted to be set to indicate an active or inactive state of the processor, a condition bit register adapted to be set into a first or second value by the currently executing basic block, and an activity bit register responsive to the value of the condition bit register and adapted to be set on for the first value and off for the second value, said apparatus being characterised in that each processor further comprises a priority or order register adapted to be set, for an active processor, to the priority order value of the basic block of instructions currently being executed thereon and, for an inactive processor, to the priority order value of a basic block of instructions yet to be executed; means for comparing the order register contents to detect any inactive processor of which the priority order register holds a value less than the value held by the priority order register of any active processor; means operative upon such detection for identifying the inactive processor (or processors) having the minimum priority order value in its (their) priority order register(s); and means, effective on completion of the current block of instructions, to cause the control unit to schedule execution of the block of instructions having the minimum priority order value, to start execution of the instructions in that block, and to set the activity bit register of the identified processor (or processors) to the active state.

The instruction stream is preprocessed (e.g., at compile time) by selectively inserting instructions from the set consisting of ELSE X, JOIN X, and DATUM X at the beginning of predetermined ones of the basic blocks. (The argument X represents the priority order of the block). The inserted instructions enable conditional branching when the preprocessed instruction stream is subsequently executed on an SIMD machine and renders enforceable the priority ordering in the execution of the blocks. Upon the occurrence of an inactive processor pointing to a basic block of an order less than the order of the basic block currently being executed, the activity mask is altered so as to cause control to move to the basic block of lower order.

The execution of JOIN causes all processors waiting for the current block execution to be activated. In contrast, execution of ELSE results in the change of the current block order to be the minimum of the vector of block order registers. DATUM is a place holding instruction and serves to store the priority order number of the SESE block that follows. That is, the argument of the DATUM instruction is the priority order number.

Priority ordering involves the assignment of a unique number to each basic block so that the basic blocks are linearly ordered. Further, the ordering is such that a vector processor, whenever it has a choice of the next basic block to execute, always selects the lower ordered one. One procedure for priority ordering involves selecting a left/right ordering of the out edges for each conditional branch node. This is accomplished by the association of "left" with unsuccessful branches and "right" with successful branches.

The preprocessing step assumes the blocks to be in a flowgraph (directed graph) relation. It includes the substeps of (1) inserting a JOIN instruction at the beginning of each target of a left branch, (2) inserting an ELSE instruction at the beginning of the target of any right branch for which the corresponding left branch target has a lower order, and (3) inserting an ELSE instruction at the beginning of the target node of which edge edge satisfies the following two conditions (a) the interval defined by consecutive blocks (i,j) contains a JOIN or ELSE and (b) either the interval is not a left branch or the interval is incomplete or unprotected.

The invention includes a two phase method for controlling the execution of a single entrance, single exit (SESE) program instruction sequence on a single instruction, multiple datastream (SIMD) machine during a second phase, which SESE instruction sequences were previously conditioned from an ordinary program instruction sequence on a single instruction, single datastream (SISD) machine during a first phase, said method being carried out on an SIMD machine comprising apparatus, as aforesaid, and said method comprising:

during the first phase, the steps of:

(a) compiling the ordinary program instruction sequence and decomposing it into SESE instruction sequences, the last instruction in each sequence being either a conditional or unconditional branch;

(b) priority ordering the sequences according to a depth ordering convention and assigning sequence label numbers thereto; and

(c) inserting either an ELSE, JOIN or DATUM instruction at the beginning of sequences selected according to a first predetermined convention, said JOIN instruction being effective to cause all processors waiting for the current block execution to be activated, said ELSE instruction being effective to change the current block execution order so that the block having the lowest priority order number is next to be executed, and said DATUM instruction being effective to store the priority order numbers of the blocks that follow; and

during the second phase, the steps of:

(d) causing an SESE sequence processed during the first phase to be executed on one or more processors of the SIMD machine in parallel; and causing the designation of the next executable SESE sequence as a function of the matching or mismatching of the SESE sequence targets of the branches of the sequence currently being executed on one or more processors according to a second predetermined convention;

(e) upon the occurrence of a branch instruction, ascertaining the targets and, if there does not exist a target to a successful conditional branch, transferring control to the unique target, otherwise transferring control to the successful conditional branch and masking off as inactive the processors corresponding to the target of the unsuccessful conditional branch;

(f) upon the occurrence of an ELSE instruction in said current SESE sequence as applied to the SIMD machine, ascertaining the next SESE target sequence having the lowest priority order number: masking on into an active state each inactive processor awaiting execution of the ascertained target SESE sequence; and masking off into an inactive state all other processors awaiting to execute other SESE sequences; or

(g) upon the occurrence of a JOIN instruction in said current SESE sequence as applied to the SIMD machine, masking on into an active state those inactive processors waiting to execute SESE sequences having a priority order number the same as that of the SESE sequence currently being executed by the SIMD machine.

The invention will now be described by way of example with reference to the accompanying drawings in which:—

Figure 1 is a block diagram of an embodiment of a data processing system according to the invention;

Figure 2 illustrates the defining characteristics of basic blocks and flowgraphs at Figure 11, including one method for insertion of ELSE and JOIN;

Figure 3 shows register states at points in the execution of the example program of Figure 2;

Figure 4 shows the control and data pathing in the data processing system embodying the invention;

Figure 5 sets forth the instruction execution cycle involving selective altering of the activity masks;

Figures 6, 7 and 8 show apparatus for implementing register modification and status; and

Figures 9 and 10 set out comparator circuit arrangements required for enforcing priority ordering.

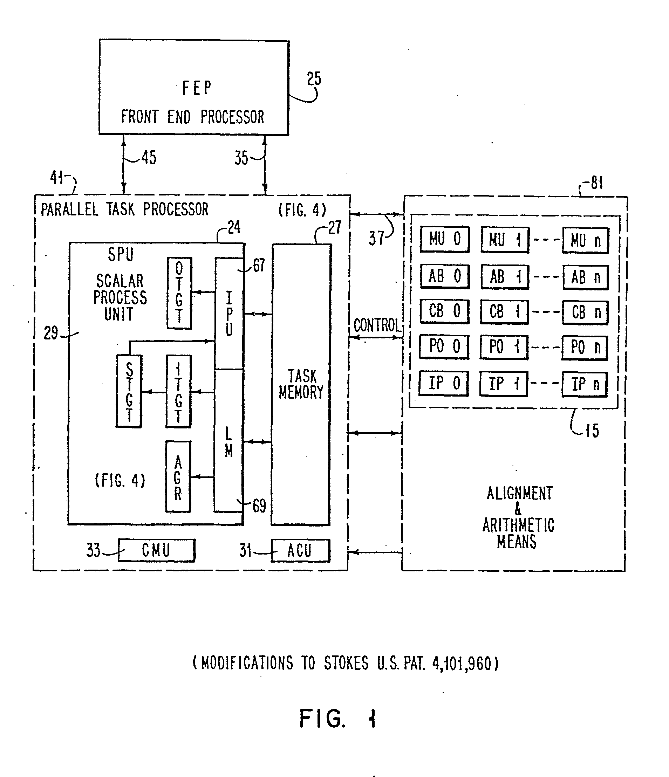

Referring to Figure 1, there are shown the major elements of a SIMD system. Front-end processor 25 communicates both program and data elements over paths 45 and 35 to parallel task processor 41. Data and those instructions capable of being executed by an array 81 of n parallel processors are both communicated thereto and controlled by task processor 41 over plural lines 37 and others not identified. The system embodying the invention provides an improvement in the system disclosed in U.S. Patent No. 4,101,960, which has also a front end processor for preprocessing.

The system disclosed in U.S. Patent 4,101,960 includes an array of n parallel processors. Each processor in turn has a memory unit MU, a memory interface MI, a bus 37 over which array orders and data are communicated, an arithmetic element AE, and a pair of multiplexors, one for serial-to-parallel conversion of bus data into the arithmetic element and the other parallel-to-serial reconversion of data from the arithmetic element back to the bus and the task processor 41.

The system embodying the invention provides also the scheduling and managing of the execution of basic blocks. This is achieved by inserting ELSE/JOIN instructions at the beginning of selected blocks by the control unit as a preprocessing step. Upon execution, such inserted instructions enforce the priority ordering. Status registers have been added to the array, together with comparison circuitry. These include an activity bit AB, priority order PO, conditional bit CB, and instruction pointer IP registers for each of the n processors in the array. In this regard, the "activity mask" is the set of the n activity bit registers. By setting any individual bit, the control unit turns the associated array processor on/off, i.e., active/inactive.

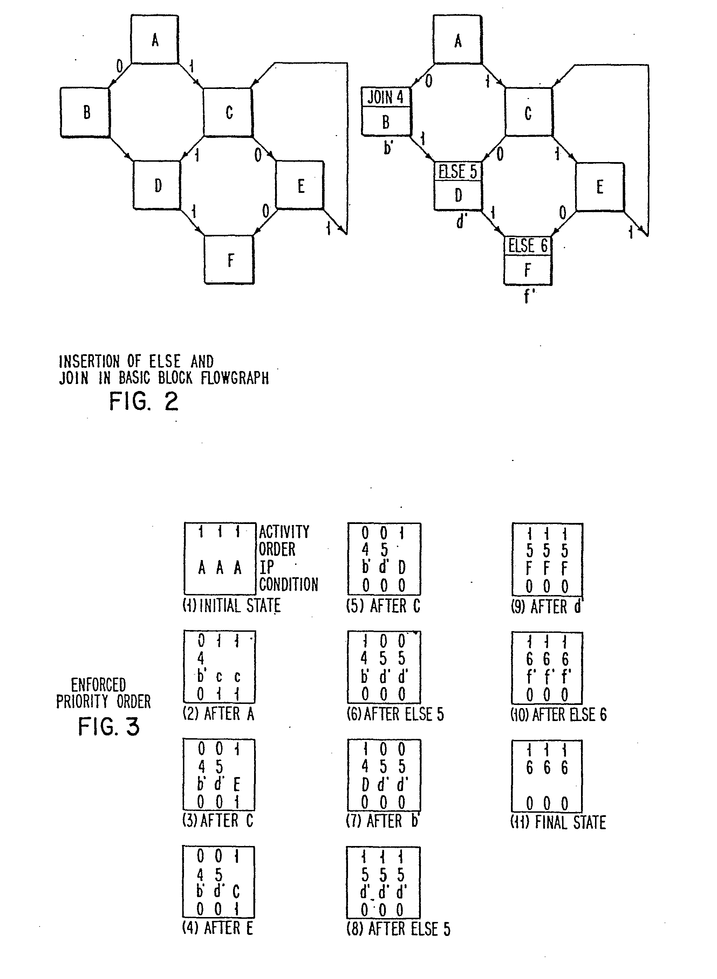

Referring to Figure 2 when taken together with Figure 11, there is depicted a plurality of basic blocks in flowgraph relation and possible insertion points at the beginning of each block. The method, as illustrated, inserts only JOIN and ELSE instructions. Alternatively, the instruction "JOIN 4" appearing in block B, may be replaced by the instruction "DATUM 4". Figure 3 illustrates one possible execution sequence for the sample program of Figure 2.

The system embodying the invention provides (1) the use of ELSE and JOIN instructions for enforcing any given priority ordering and (2) the use of any priority ordering in executing multiple paths through the program produced by branch-on-condition instructions. Because in Figure 11, the depicted flowgraph has a large number of possible insertion points, then the issue is to identify a small but sufficient set of insertion points for the ELSE and JOIN instructions in order to enforce a specified order.

If A and B are nodes, then we will use [A,B] to denote the edge from A to B. The interval (A,B) is defined as the set of nodes with order greater than that of A and less than that of B. The edge [A,B] is increasing if the order of A is less than that of B. The edge [A,B] is decreasing if the order of A is greater than that of B. B is referred to as the target of edge [A,B]. An interval is complete, if either no decreasing edge leaves it or all decreasing edges which leave it, leave from the node of maximum order from which no branch returns to the interval. An edge corresponding to the failure or success of a conditional branch likewise corresponds respectively to a left or right branch. An interval (A,B) is protected if it can be entered only by an edge from A.

The preprocessing step, involving selective insertion depicted in Figures 2 and 11, is governed by the following criteria:

(1) Insert a JOIN instruction at the beginning of each target of a left branch.

(2) Insert an ELSE instruction at the beginning of the target of any right branch for which the corresponding left branch target has a lower order.

(3) Insert, or replace, a JOIN instruction with an ELSE instruction at the beginning of the target node of each edge [A,B] satisfying the two conditions:

(a) The interval (A,B) contains a JOIN or a ELSE, and

(b) Either [A,B] is not a left branch, or (A,B) is incomplete or unprotected.

(4) Repeat step 3 until there is no change.

Referring now to Figure 3, when taken together with Figure 2, it should be assumed that the program represented as flowgraph in Figure 11, has a stipulated priority ordering in which the label for each basic block, such as A,B, is also its symbolic address. A typical priority ordering could be expressed as follows:

| Address | Order |
|---------|-------|
| A | 1 |
| B | 4 |
| C | 2 |
| D | 5 |
| E | 3 |
| F | 6 |

Note that the interval (1,4) is complete and protected. Interval (2,5) is incomplete and unprotected, while the interval (3,6) is complete and unprotected. Thus, one inserts JOIN 4 at b, ELSE 5 at d, and ELSE 6 at f. This is exemplified in Figure 2.

Suppose there are three processors and the three paths to be taken are as follows:

Path 1:   a,b,d,f

Path 2:   a,c,d,f

Path 3:   a,c,e,c,d,f

The states of the registers will be those as shown in Figure 3.

During the execution of each basic block, condition bits may be set in the counterpart array processor registers. Conditional (or unconditional) branch instructions occur only at the end of a block. Condition bits result from the interaction of program and data and represent a control path selection determined by data.

During the execution of conditional branch instruction (BC), three cases are distinguished:

(1) All 0, all condition bits (CB0 to CBn) are 0;
(2) ALL 1, all condition bits are 1;
(3) Mixed, some condition bits are 0, some are 1.

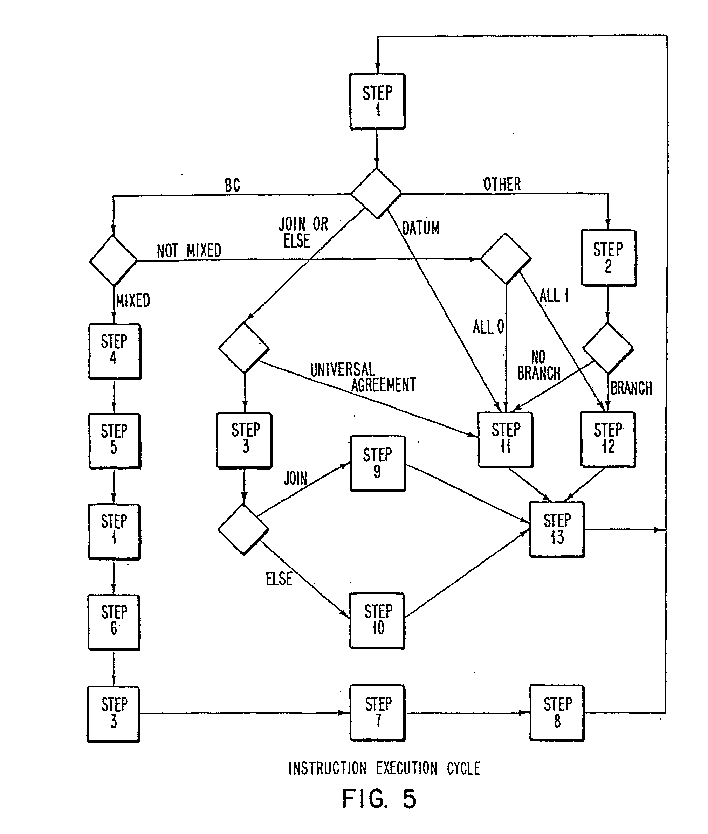

Circuitry for identifying these conditions and enabling respectively (1) step 11, (2) step 12, or (3) step 4, of the instruction execution cycle shown in Figure 5, are not illustrated. The ALL 0 case is to be executed as if there were no branch (step 11). The ALL 1 case is to be executed as if there were an unconditional branch (step 12). In the mixed case, processors are treated depending on the value of the counterpart condition bit. Details of the instruction execution cycle per Figure 5 shall be described subsequently.

The following is a discussion of the execution of conditional branch instructions (BC), JOIN, ELSE, DATUM, as well as instructions including unconditional branch instructions capable of being executed on a SIMD machine, disclosed in U.S. Patent No. 4,101,960. For purposes of simplification only, two-way branches are described. The extension to multi-way branches is believed to be well within the scope of the skilled artisan when imbued with the teachings of this invention.

If the conditional bit for a processor is 0, then the activity bit associated therewith is turned off, i.e., AB[i]=0. At the same time, the argument of the first (ELSE/JOIN/DATUM) instruction of the target block for CONDITION=0 is loaded in the PO register. This argument represents the priority order of the next block that the now inactive processor would be awaiting. Concurrently, the IP register is set to address the instruction after the ELSE, JOIN, or DATUM just read.

If the condition bit for a processor is 1, then the activity bit associated therewith is turned on, i.e., AB[i]=1. At the same time, the argument of the first ELSE/JOIN instruction is of no immediate interest, since the processor is in an active state. The purpose of the PO register contents is to define priority ordering with reference to inactive processors. The IP register is set to the location of the first instruction of the target block.

During the execution of an ELSE instruction, a comparison circuit arrangement indicates where the PO register of an inactive processor (AB=0) points to a block of order lower than the order contained within the PO register of a currently active processor (AB=1). It is necessary to identify which processor PO register contains the minimum (lowest) order for the PO register set, then mask "on" the associated inactive processor and mask "off" the formerly active processors.

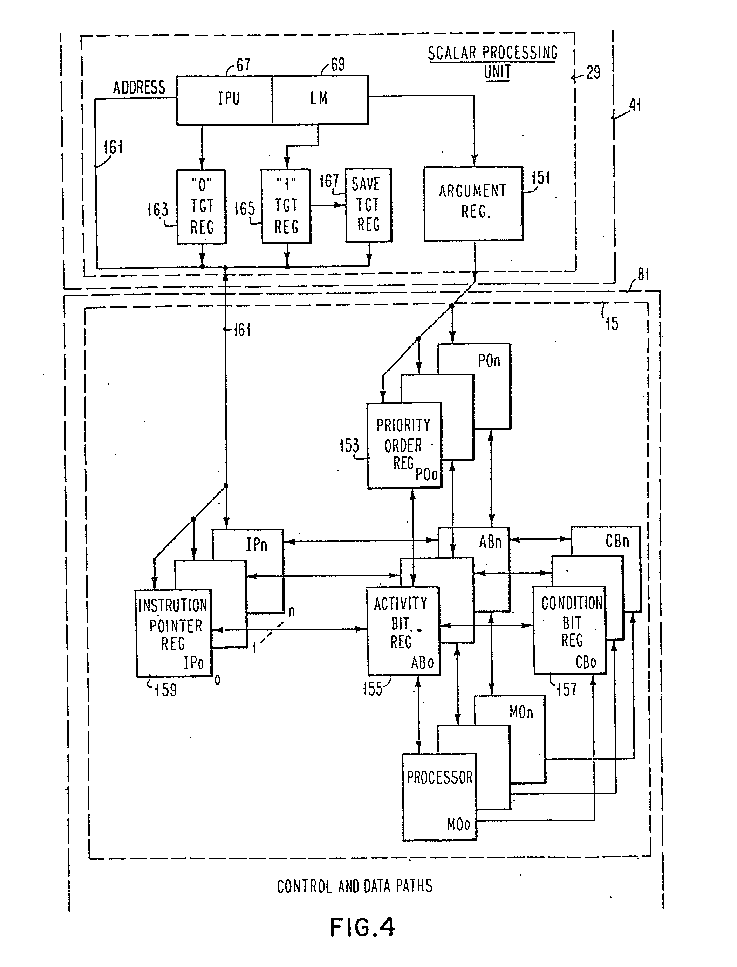

Referring now to Figure 4, there is shown the control and data pathing of the register plurality and controls added to the parallel task processor 41 and array 81 for implementing the method of the invention. Here, argument register 151 interconnects order register plurality 153 to the parallel task processor 41. In turn, the n-priority order registers constituting plurality 153 drive n counterpart activity bit registers 155. These terminate in counterpart ones of n condition CB bit registers 157. The complex of argument, order, activity bit and condition registers defines the processing condition of counterpart ones of the parallel processors in array 81. Instruction pointer registers 159 are coupled to the instruction processing unit 67 and a target register set 163, 165, and 167 over an address bus 161.

The register set 163, 165, and 167 modifies the contents of one or more instruction pointer registers. In this regard, reference should be made to Figure 5. In steps 3 and 11, the contents of the "0" TGT register are copied into all active instruction pointer registers over bus 161. In step 12, the contents of the "1" TGT register are also copied. In step 13, the contents of the lowest numbered active instruction pointer register are sent over address bus 161 to the IPU as the address of the next instruction to be fetched from the TASK MEMORY 27.

In the modification to U.S. Patent No. 4,101,960, the scaler processing unit 29 must be altered such that specific registers associated with the pair IPU 67 and LM 69 contain the predetermined values after an instruction FETCH from task memory 27. Accordingly, 0 TGT register 163 contains the address in task memory 27 of the instruction stored immediately *after* the one currently being executed;

1 TGT register 165 contains the address of the instruction to which the control would be transferred if the current instruction were an unconditional branch instruction (or a conditional branch instruction with conditions satisfied);

ARG register 151 contains the value of the first operand of the current instruction. Note, that ARG and 1 TGT may be the same register.

It is of some interest that the ELSE instruction which moves control from one basic block to another does this by selectively altering the activity mask. That is, bits in the vector of the activity bit registers are changed. The execution of ELSE results in the change of the current block order to be the minimum of the set of block order registers.

Referring now to Figure 3, subfigure 5, there is shown the state of the machine just before execution of the ELSE 5 instruction. For purposes of explanation, it is assumed that only three processors are present. The following is a step-by-step account corresponding to Figure 5 of the Execution of the instruction ELSE 5.

In Figure 5, in step 1, the instruction ELSE 5 is fetched from memory where it resided at address "d". Alternatively, the instruction may have been prefetched or it may reside in a buffer of the IPU. The "0" TGT register receives the address "d'" while the "1" TGT register and the ARG register received the value 5. Decoding logic, not otherwise illustrated, indicates the following state (1) the instruction is of the ELSE format, and (2) there is no universal agreement. That is, one of the activity registers is 0. Thus, the next step in the execution cycle is step 3. This is followed by steps 10 and 13.

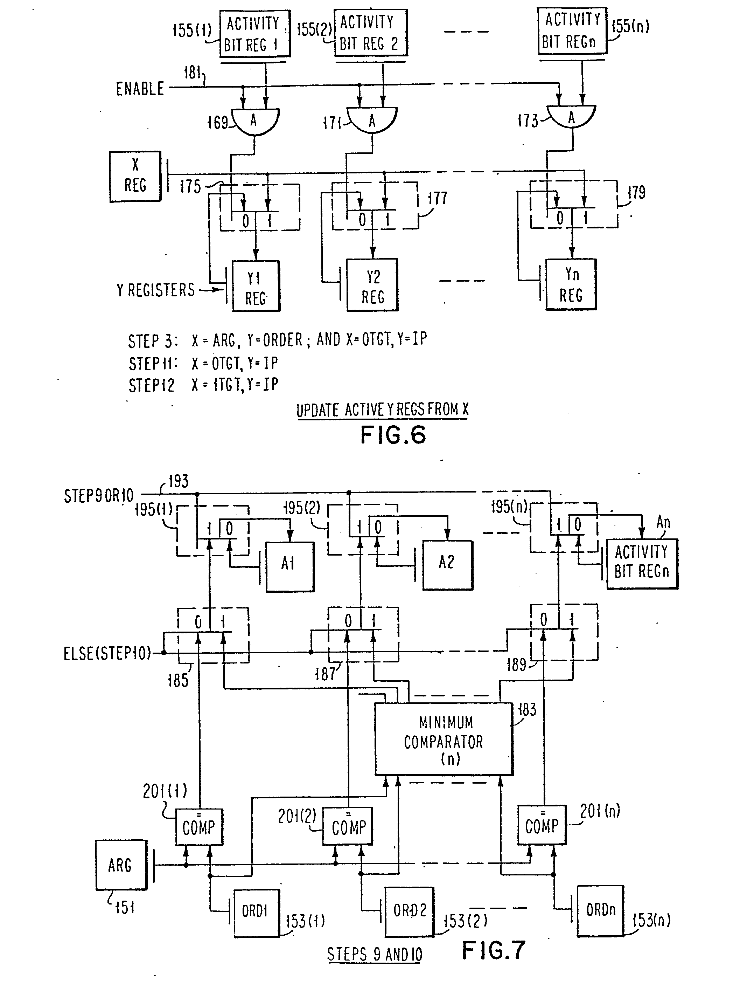

In step 3, the logic described in Figure 6 allows the IP register IP 3 to receive the value d', while the other IP registers keep their current values IP 1=b', IP 2=d'. Also, the active priority order register PO 3 receives the value 5 from ARG, while the other PO registers remain at PO 1=4, PO 2=5.

At the beginning of step 10, the register states are as follows: AB 1=0, AB 2=0, AB 3=1; PO 1=4, PO 2=5, PO 3=5; IP 1=b', IP 2=d', IP 3=d'; CB 1=0, CB 2=0, and CB 3=0. In step 10, referring to Figure 7, both lines 193 and 191 are enabled, and PO registers send their values to the generalized comparator 183. Comparator 183 sends a 1 on its corresponding output line for those PO registers with the minimum value. Thus, AB 1 will receive a 1, while AB 2 and AB 3 will each receive 0. This yields the final configuration depicted in Figure 3, Subfigure 6.

In step 13, the switch labelled step 13 in Figure 5, is set to 1 and AB 1=1, so that the address b' in IP 1 is sent on the address bus 161 to the IPU. This indicates that the next instruction will be fetched memory location b'. This completes the cycle.

Referring now to Figure 6, 7, and 8, there is shown apparatus for implementing register modification and status, correlated with instruction execution steps depicted in Figure 5. In Figure 6, the register-to-register transfers for steps 3, 11, and 12 are shown. Step 3 contemplates two transfers. The first is from ARG register 151 to ORDER registers 153. The second is from "0" TRG register 163 to IP register 159. In step 11, there is a data movement from register 163 to IP registers 159. In contrast, in step 12, the data movement is from companion 1 TGT register 165 to IP register 159. In these x-to-y register-to-register transfers the control logic includes a plurality of AND gates 169, 171, 173 activating counterpart y registers through switching elements 175, 177 and 179, if the status of the array processor is active, as registered by a 1 in the counterpart activity bit register at the time the AND gates are enabled by an appropriate clocking signal (not shown on path 181).

Referring now to Figure 7, there is shown a logic arrangement for implementing steps 9 and 10. Step 10 requires the rewriting of the ACTIVITY bits in register set 155 (A1, A2, An), corresponding to the contents of the order register set 153 made equal to the contents of the ARG register 151. Step 10 requires rewriting the contents of the activity bit registers according to the minimum order register contents. This latter is determined by the comparator arrangements 183 and 201 (1) . . . 201(n).

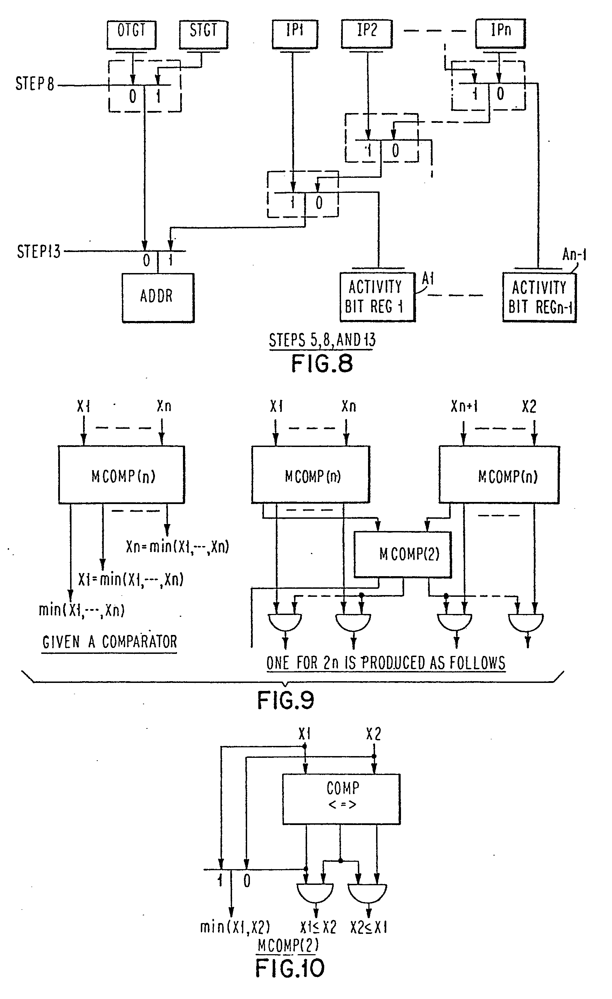

Referring now to Figure 8, there is shown the logic arrangement for obtaining the next address on bus 161 for an instruction FETCH in parallel task processor 41. The address bus 161 is enabled in steps 5, 8, and 13.

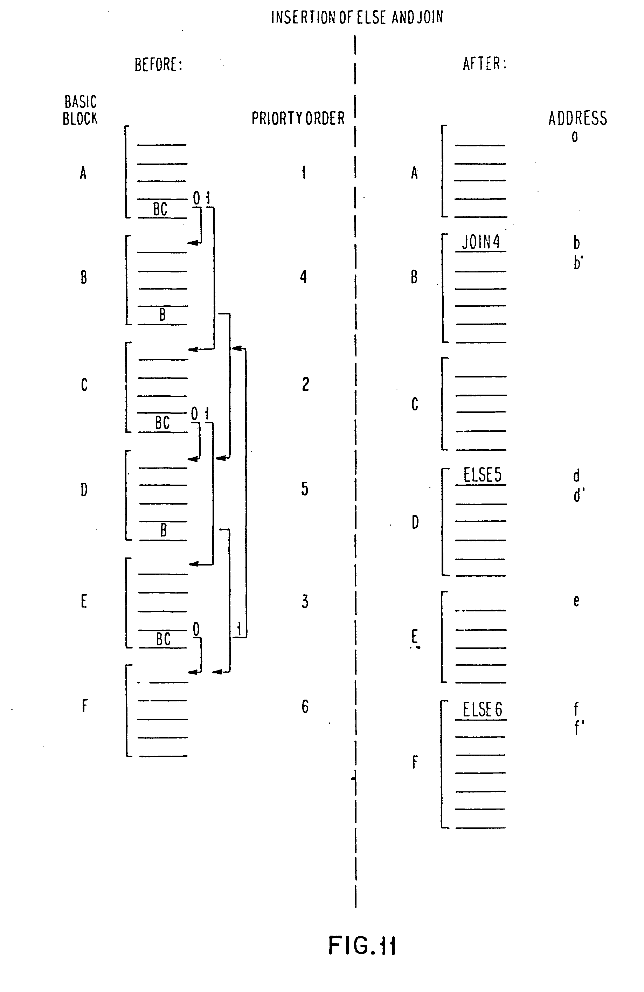

Referring now to Figures 9 and 10, there is shown a comparative circuit arrangement for identifying a minimum one of a set of numbers applied to the comparator inputs. Reference should be made to John B. Peatman, "Design of Digital Systems", McGraw-Hill, 1972, at pages 42 and 43. Note in Figures 9 and 10 at MCOMP (n) compares n values from the n PO registers and gives one value priority order register length in size output and n single bit outputs. Figures 9 and 10 further illustrate (a) the relations among the several MCOMP.

The cycle steps of Figure 5 may be summarized as:

Step 1.    Fetch instruction to IU from MEMORY. Obtain 0 TGT, 1 TGT, and ARG from IPU.

Step 2.    Execute standard machine instruction.
Step 3.    Update active ORDER registers from ARG. Update active IP registers from 0 TGT.
Step 4.    Copy STGT from 1 TGT.
Step 5.    Obtain ADDR from 0 TGT.
Step 6.    Zero inactive CONDITION bit registers. Rewrite ACT bit registers as ACT and CONDITION so that active registers are the subset of previously active registers corresponding to CONDITION=0.
Step 7.    Rewrite ACT as CONDITION, i.e., copy all CONDITION bit registers into the corresponding ACT bit registers.
Step 8.    Obtain ADDR from STGT.
Step 9.    Rewrite ACT as ORDER=ARG, activating registers corresponding to ORDER registers with the current order found in ARG.
Step 10.   Rewrite ACT as ORDER—min(ORDER), activating exactly those registers corresponding to ORDER registers containing the minimum value currently contained by ORDER registers.
Step 11.   Update active IP registers from 0 TGT.
Step 12.   Update active IP registers from 1 TGT.
Step 13.   Obtain ADDR from the first (or any active IP register.

## Claims

1. Data processor apparatus comprising an array (81) of parallel processors (15) and a control unit therefor; said control unit being operable to schedule the sequence of execution of a program of basic blocks of instructions, each - block having a priority value assigned to it and comprising a linearly ordered sequence of instructions, to interpret the instructions and to start execution of a basic block of instructions on the processors of the array; and each processor including an execution status register adapted to be set to indicate an active or inactive state of the processor, a condition bit register (157) adapted to be set into a first or second value by the currently executing basic block, and an activity bit register (155) responsive to the value of the condition bit register and adapted to be set on for the first value and off for the second value, said apparatus being characterised in that each processor further comprises a priority or order register (153) adapted to be set, for an active processor, to the priority order value of the basic block of instructions currently being executed thereon and, for an inactive processor, to the priority order value of a basic block of instructions yet to be executed; means for comparing the order register contents to detect any inactive processor of which the priority order register holds a value less than the value held by the priority order register of any acitve processor; means operative upon such detection for identifying the inactive processor (or processors) having the minimum priority order value in its (their) priority order register(s); and means, effective on completion of the current block of instructions, to cause the control unit to schedule execution of the block of instructions having the minimum priority order value, to start execution of the instructions in that block, and to set the activity bit register of the identified processor (or processors) to the active state.

2. A method of operating apparatus as claimed in claim 1, comprising modifying the program of instructions by selectively inserting instructions from a set consisting of a JOIN instruction effective to cause all processors waiting for the current block execution to be activated, an ELSE instruction effective to change the current block execution order so that the block having the lowest priority order number is next to be executed, and a DATUM instruction effective to store the priority order numbers of the blocks that follow, said instructions being inserted at the beginning of predetermined ones of the basic blocks so as to enforce the priority ordering in the execution of said blocks, and upon the occurrence of an inactive processor pointing to a basic block which has priority order less than the order of the basic block currently being executed, selectively altering the activity mask and causing control to move to the basic block of lower order.

3. A method as claimed in claim 2, further comprising inserting a JOIN instruction at the beginning of each target block of a left branch, inserting an ELSE instruction at the beginning of the target basic block of any right branch for which the corresponding left branch target basic block has a lower order, and inserting an ELSE instruction at the beginning of the target node of which each edge [i,j] satisfies the conditions that the interval (i,j) contains a JOIN or ELSE and either the edge [i,j] is not a left branch or the interval is incomplete and unprotected.

4. A method as claimed in claim 2 or 3, further comprising selectively altering the activity mask and moving control by executing one of the instructions from the set consisting of ELSE, JOIN, and BC (conditional branch).

5. A method as claimed in claim 4, further comprising the ELSE instruction by changing the order number of active processors of the array to be equal to the argument of the ELSE instruction, updating the instruction pointers for each active processor to the next instruction, while maintaining the instruction pointers for the inactive processors the same, and activating exactly those processors with the minimum order number by selectively altering the counterpart activity mask.

6. A method of operating apparatus as claimed in claim 1 when M out of N of the processors are active and N—M processors are masked off as inactive while awaiting another program block, each block being labelled with a unique identifier, said method comprising fetching the block label from the instruction block and determining the minimum label number k in the set of all N blocks waiting execution by both the active and inactive processors, and unmasking all processors seeking to execute block k and masking the remaining processors, this step being taken in over-lap relation such that at the end of the execution of segments k, another mask and branch operation (ELSE) will be executed and the next block ascertained.

7. A two phase method for controlling the execution of a single entrance, single exit (SESE) program instruction sequence on a single instruction, multiple datastream (SIMD) machine during a second phase which SESE instruction sequences were previously conditioned from an ordinary program instruction sequence on a single instruction, single datastream (SISD) machine during a first phase, said method being carried out on an SIMD machine as claimed in claim 1 and comprising:

during the first phase, the steps of:

(a) compiling the ordinary program instruction sequence and decomposing it into SESE instruction sequences, the last instruction in each sequence being either a conditional or unconditional branch;

(b) priority ordering the sequences according to a depth ordering convention and assigning sequence label numbers thereto; and

(c) inserting either an ELSE, JOIN or DATUM instruction at the beginning of sequences selected according to a first predetermined convention, said JOIN instruction being effective to cause all processors waiting for the current block execution to be activated, said ELSE instruction being effective to change the current block execution order so that the block having the lowest priority order number is next to be executed, and said DATUM instruction being effective to store the priority order numbers of the blocks that follow; and

during the second phase, the steps of:

(d) causing an SESE sequence processed during the first phase to be executed on one or more processors of the SIMD machine in parallel; and causing the designation of the next executable SESE sequence as a function of the matching or mismatching of the SESE sequence targets of the branches of the sequence currently being executed on one or more processors according to a second predetermined convention;

(e) upon the occurrence of a branch instruction, ascertaining the targets and, if there does not exist a target to a successful conditional branch, transferring control to the unique target, otherwise transferring control to the successful conditional branch and masking off as inactive the processors corresponding to the target of the unsuccessful conditional branch;

(f) upon the occurrence of an ELSE instruction in said current SESE sequence as applied to the SIMD machine, ascertaining the next SESE target sequence having the lowest priority order number: masking on into an active state each inactive processor awaiting execution of the ascertained target SESE sequence; and masking off into an inactive state all other processors awaiting to execute other SESE sequences; or

(g) upon the occurrence of a JOIN instruction in said current SESE sequence as applied to the SIMD machine, masking on into an active state those inactive processors waiting to execute SESE sequences having a priority order number the same as that of the SESE sequence currently being executed by the SIMD machine.

**Revendications**

1. Appareil de traitement des données comportant un réseau (81) d'unités de traitement (15) montées en parallèle et une unité de commande pour ces dernières, ladite unité de commande pouvant être actionnée de manière à programmer la séquence d'exécution d'un gramme de blocs de base d'instructions, dont chacun possède une valeur de priorité que lui est assignée, et comprenant une séquence ordonnée linéairement d'instructions, pour interpréter les instructions et déclencher l'exécution d'un bloc de base d'instructions dan les unités de traitement du réseau, et chaque unité de traitement incluant un registre d'état d'exécution apte à être positionné de manière à indiquer un état actif ou inactif de l'unité de traitement, un registre de bits d'état (157) apte à être positionné à une première ou à une seconde valeur par l'exécution en cours du bloc de base, et un registre de bits d'activité (155) répondant à la valeur du registre de bits d'état et apte à être branché pour la première valeur et débranché pour la seconde valeur, ledit appareil étant caractérisé en ce que chaque unité de traitement comporte en outre un registre de priorités ou d'ordres (153) apte à être positionné, pour une unité de traitement active, sur la valeur d'ordre de priorité du block de base d'instructions en cours d'exécution dans cette unité et, pour une unité de traitement inactive, sur la valeur d'ordre de priorité d'un bloc de base d'instructions restant encore à exécuter, des moyens pour comparer les contenus des registres d'ordres pour détecter toute unité de traitement inactive dont le registre d'ordres de priorité conserve une valeur inférieure à la valeur conservée par le registre d'ordres de priorité de n'importe quelle unité de traitement active, des moyens aptes à agir lors d'une telle détection pour identifier la ou les unités de traitement actives contenant la valeur d'ordre de priorité minimale dans son ou leurs registres de priorités, et des moyens, agissant, lors de l'achèvement du bloc d'instructions et servant à commander l'unité de commande pour qu'elle programme l'exécution du bloc d'instructions possédant la valeur d'ordre de priorité minimale, qu'elle déclenche l'exécution des instructions dans ce bloc et qu'elle positionne le registre de bits d'activité de la ou des unités de traitement identifiées sur l'état actif.

2. Procédé de fonctionnement de l'appareil tel que revendiqué dans la revendication 1, incluant la modification du programme d'instructions par insertion sélective d'instructions à partir d'un ensemble constitué par une instruction JOIN servant à provoquer l'activation de toutes les unités de traitement attendant l'exécution du bloc en cours, une instruction ELSE apte à modifier l'ordre d'exécution du bloc en cours de telle sorte que le bloc possédant le numéro d'ordre de priorité le plus faible sera exécuté aussitôt après, et une instruction DATUM apte à provoquer la mémorisation des numéros d'ordre de priorité des blocs qui suivent, lesdites instructions étant insérées au début de blocs prédéterminés faisant partie des blocs de base de manière à imposer l'ordonnancement des priorités dans l'exécution desdits blocs, et, lors de l'apparition d'une unité de traitement inactive, la désignation d'un bloc de base qui possède un ordre de priorité inférieur à l'ordre du bloc de base qui est en cours d'exécution, la modification sélective du masque d'activité et le déclenchement de la commande pour passer au bloc de base d'ordre inférieur.

3. Procédé tel que revendiqué dans la revendication 2, comprenant en outre l'insertion d'une instruction JOIN au début de chaque block destinataire d'un branchement de gauche, l'introduction d'une instruction ELSE au début du bloc de base destinataire de tout branchement de droite pour lequel le bloc de base destinataire du branchement de gauche correspondant possède un ordre inférieur, et l'introduction d'une instruction ELSE au début du noeud de destination dont chaque bord [i,j] satisfait aux conditions selon lesquelles l'intervalle (i,j) contient une instruction JOIN ou ELSE et l'un ou l'autre des bords [i,j] n'est pas un branchement de gauche, ou l'intervalle est incomplet et non protégé.

4. Procédé tel que revendiqué dans la revendication 2 ou 3 comprenant en outre la modification sélective du masque d'activité et le déplacement de la commande par l'exécution de l'une des instructions parmi l'ensemble constitué par JOIN, ELSE et BC (branchement conditionnel).

5. Procédé tel que revendiqué dans la revendication 4, comprenant en outre l'instruction ELSE par modification du numéro d'ordre des unités de traitement actives du réseau pour qu'il soit égal à l'argument de l'instruction ELSE, la mise à jour des pointeurs des instructions pour chaque unité de traitement active sur l'instruction suivante, tout en conservant identiques les pointeurs d'instructions pour les unités de traitement inactives, et l'activation précisément des unités de traitement possédant le numéro d'ordre minimum par modification sélective du masque d'activité correspondant.

6. Procédé de fonctionnement de l'appareil tel que revendiqué dans la revendication 5, lorsque M unités parmi N des unités de traitement sont actives et que N—M unités de traitement sont débranchées par masquage dans l'élat inactif dans l'attente d'un autre bloc de programme, chaque bloc étant étiqueté avec un identificateur unique, ledit procédé incluant l'extraction de l'étiquette de bloc du bloc d'instructions et la détermination du nombre minimum d'étiquettes k dans l'ensemble de tous les blocs attendant leur exécution à la fois par les unités de traitement actives et inactives, et le démasquage de toutes les unités de traitement cherchant à exécuter le bloc k et le masquage des unités de traitement restantes, cette phase opératoire étant effectuées avec chevauchement réciproque de telle sorte qu'à la fin de l'exécution de segments k, une autre opération de masquage et de branchement (ELSE) sera exécutée et le nouveau block sera vérifié.

7. Procédé á deux phases pour la commande de l'exécution d'une séquence d'instructions de programme à une seule entrée et une seule sortie (SESE), dans une machine à flux de données multiples à une instruction (SIMD) pendant une second phase, lesquelles séquences d'instruction (SESE) ont été préalablement conditionnées à partir d'une séquence d'instructions de programme ordinaire dans une machine á flux unique de données à une seule instruction (SISD) pendant une première phase, ledit procédé étant mis en oeuvre sur une machine (SIMD) telle que revendiquée dans la revendication 1 et incluant:

pendant la première phase opératoire, les étapes de:

(a) compilation de la séquence d'instructions de programme ordinaire et sa décomposition en séquence d'instructions SESE, la dernière instruction de chaque séquence étant soit un branchement conditionnel, soit un branchement inconditionnel,

(b) ordonnancement des priorités des séquences conformément à une convention d'ordonnancement en profondeur et affectation de numéros d'étiquettes de séquences à ces séquences, et

(c) introduction d'instructions ELSE, JOIN ou DATUM au début des séquences sélectionnées conformément à une première convention prédéterminée, ladite instruction JOIN étant apte à déclencher l'activation de toutes les unités de traitement attendant l'exécution du bloc en cours, ladite instruction ELSE étant apte à modifier l'ordre d'exécution du bloc en cours de telle sorte que le bloc possédant le numéro d'ordre de priorité le plus faible sera exécuté aussitôt après, et ladite instruction DATUM étant apte à provoquer la mémorisation des numéros d'ordres de priorités des blocs qui suivent, et

pendant la seconde phase opératoire, les étapes de:

(d) déclenchement de l'exécution d'une séquence SESE, traitée pendant la première phase, dans une ou plusieurs unités de traitement de la machine SIMD en parallèle, et validation de l'affectation de la séquence SESE suivante exécutable en fonction de la correspondance ou de la non correspondance des destinations de séquence SESE des branchements de la séquence en cours d'exécution sur une ou plusieurs des unités de traitement conformément à une seconde convention prédéterminée,

(e) lors de l'apparition d'une instruction de branchement, vérification des destinations et, s'il n'existe aucune destination aboutissant à un branchement conditionnel réussi, transfert de la commande à la destination unique, sinon transfert de la commande au branchement conditionnel réussi et débranchement par masquage à l'état inactif des unités de traitement correspondant à la destination du branchement conditionnel non réussi,

(f) lors de l'apparition d'une instruction ELSE dans ladite séquence SESE en cours telle qu'elle est appliquée à la mémoire SIMD, vérification du fait que la séquence de destination SESE suivante possède le numéro d'ordre de priorité le plus faible, branchement par masquage à l'état actif de chaque unité de traitement inactive attendant l'exécution de la séquence SESE de destination vérifiée, et débranchement par masquage dans un état inactif de toutes les autres unités de traitement attendant l'exécution d'autres séquences SESE, ou

(g) lors de l'apparition d'une instruction JOIN dans ladite séquence SESE en cours telle qu'elle est appliquée à la machine SIMD, branchement par masquage à l'état actif des unités de traitement inactives attendant l'exécution de séquences SESE possédant un numéro d'ordre de priorité identique à celui de la séquence SESE en train d'être exécutée par la machine SIMD.

**Patentansprüche**

1. Datenverarbeitungsgerät mit einem Feld (81) paralleler Prozessoren (15) und einer Steuereinheit für diese; wobei die Steuereinheit so betreibbar ist, daß sie die Ausführungsfolge eines Programms von Grundblöcken von Befehlen plant, wobei jedem Block ein Prioritätswert zugeordnet ist und jeder Block eine linear geordnete Folge von Befehlen aufweist, daß sie die Befehle interpretiert und die Ausführung eines Grundblocks von Befehlen auf den Prozessoren des Feldes beginnt; wobei jeder Prozessor ein Ausführungsstatusregister, das so gesetzt werden kann, daß es einen aktiven oder inaktiven Zustand des Prozessors angibt, ein Bedingungsbitregister (157), das auf einen ersten oder einen zweiten Wert durch den gerade ausführenden Grundblock gesetzt werden kann, und ein Aktivitätsbitregister (155), welches auf den Wert des Bedingungsbitregisters anspricht und auf ein für den ersten Wert und auf aus für den zweiten Wert gesetzt werden kann, enthält, wobei das Gerät dadurch gekennzeichnet ist, daß jeder Prozessor ferner umfaßt ein Prioritäts- oder Ordnungsregister (153), welches für einen aktiven Prozessor auf den Prioritätsordnungswert des Grundblocks von Befehlen, der gerade darauf ausgeführt wird, und für einen inaktiven Prozessor auf den Prioritätsordnungswert eines noch auszuführenden Grundblocks von Befehlen gesetzt werden kann; Mittel zum Vergleichen des Ordnungsregisterinhalts, um jeden inaktiven Prozessor festzustellen, dessen Prioritätsordnungsregister einen Wert hält, der geringer als der vom Prioritätsordnungsregister irgendeines aktiven Prozessors gehaltene Wert ist; auf eine solche Feststellung hin wirksame Mittel zur Identifizierung des inaktiven Prozessors (oder der inaktiven Prozessoren), welcher (welche) den kleinsten Prioritätsordnungswert in seinem (ihren) Prioritätsordnungsregister (n) hat (haben); und auf Beendigung des laufenden Blocks von Befehlen hin wirksame Mittel, die bewirken, daß die Steuereinheit die Ausführung des Blocks von Befehlen mit dem kleinsten Prioritätsordnungswert plant, die Ausführung der Befehle in diesem Block beginnt und das Aktivitätsbitregister des identifizierten Prozessors (oder der identifizierten Prozessoren) auf den aktiven Zustand setzt.

2. Verfahren zur Betreibung eines Gerätes nach Anspruch 1, welches das Modifizieren des Befehlsprogramms durch ausgewähltes Einsetzen von Befehlen aus einem Satz bestehend aus einem JOIN-Befehl, der eine Aktivierung aller Prozessoren, welche auf die laufende Blockausführung warten, bewirkt, einem ELSE-Befehl, welcher einer Änderung der Ordnung der laufenden Blockausführung bewirkt, so daß der Block mit der niedrigsten Prioritätsordnungsnummer der nächste für die Ausführung ist, und einem DATUM-Befehl, der die Prioritätsordnungsnummern der nachfolgenden Blöcke speichert, wobei die Befehle am Beginn bestimmter der Grundblöcke eingesetzt werden, um das Ordnen nach Prioritäten bei der Ausführung der Blöcke zu erzwingen, und bei Auftreten eines inaktiven Prozessors, welcher auf einen Grundblock weist, der eine niedrigere Prioritätsordnung als der gerade in Ausführung befindliche Grundblock hat, das ausgewählte Ändern der Aktivitätsmaske und das Bewirken, daß sich die Steuerung zum Grundblock niedrigerer Ordnung bewegt, umfaßt.

3. Verfahren nach Anspruch 2, welches ferner das Einsetzen eines JOIN-Befehls am Beginn eines jeden Zielblocks eines linken Zweigs, das Einsetzen eines ELSE-Befehls am Beginn des Zielgrundblocks eines rechten Zweigs, für welchen der entsprechende links-zweigige Zielgrundblock eine niedrigere Ordnung hat, und das Einsetzen eines ELSE-Befehls am Beginn des Zielknotens, für welchen jeder Rand [i,j] die Bedingungen erfüllt, daß das Intervall (i,j) ein JOIN oder ein ELSE enthält und entweder der Rand [i,j] kein linker Zweig oder das Intervall unvollständig und ungeschützt ist, umfaßt.

4. Verfahren nach Anspruch 2 oder 3, welches ferner das ausgewählte Ändern der Aktivitätsmaske und das Bewegen der Steuerung durch Ausführung eines der Befehle aus dem Satz bestehend aus ELSE, JOIN und BC (bedingter Zweig) umfaßt.

5. Verfahren nach Anspruch 4, welches ferner den ELSE-Befehl durch Änderung der Ordnungsnummer von aktiven Prozessoren des Feldes so, daß sie gleich dem Argument des ELSE-Befehl wird, das Aktualsiseren der Befehlshinweiszeichen für jeden aktiven Prozessor auf den nächsten Befehl unter Beibehaltung der Befehlshinweiszeichen für die inaktiven Prozessoren, und das Aktivieren von genau denjenigen Prozessoren mit der kleinsten Ordnungsnummer durch ausgewähltes Ändern der Gegenstück-Aktivitätsmaske umfaßt.

6. Verfahren zum Betreiben des Geräts nach Anspruch 1, wenn M von N Prozessoren aktiv und N—M Prozessoren als inaktiv wegmaskiert sind, während sie einen anderen Programmblock erwarten, wobei jeder Block mit einer eigenen Kennzeichnung bezeichnet ist, wobei das Verfahren das Holen der Blockkennzeichnung aus dem Befehlsblock und Bestimmen der kleinsten Kennzeichnungsnummer k im Satz aller N Blöcke, die auf Ausführung durch sowohl die aktiven als auch die inaktiven Prozessoren warten, und das Entmaskieren aller Prozessoren, welche den Block k ausführen wellen, und Maskieren der übrigen Prozessoren umfaßt, wobei dieser Schritt in Überlapp-Beziehung derart erfolgt, daß am Ende der Ausführung von Segmenten k eine andere Maske und Zweigoperation (ELSE) ausgeführt und der nächste Block festgestellt wird.

7. Zweiphasenverfahren zur Steuerung der Ausführung einer Einzeleingangs-Einzelausgangs-(SESE-)Programmbefehlsfolge auf einer Einzelbefehls - Mehrfachdatenstrom-(SIMD-)-Maschine während einer zweiten Phase, wobei die SESE-Befehlsfolgen vorher aus einer gewöhnlichen Programmbefehlsfolge auf einer Einselbefehls - Einzeldatenstrom-(SISD-)Maschine während einer ersten Phase konditioniert wurden, wobei das Verfahren auf einer SIMD-Maschine nach Anspruch 1 durchgeführt wird und umfaßt:

während der ersten Phase:

(a) das Kompilieren der gewöhnlichen Programmbefehlsfolge und deren Zerlegung in SESE-Befehlsfolgen, wobei der letzte Befehl in jeder Folge entweder ein bedingter oder unbedingter Zweig ist;

(b) das Prioritätsordnen der Folgen entsprechend einer Tiefenordnungsübereinkunft und das Zuordnen von Folgekennzeichnungsnummern zu diesen; und

(c) das Einsetzen entweder eines ELSE-, JOIN- oder DATUM-Befehls am Beginn von Folgen, die gemäß einer ersten bestimmten, Übereinkunft ausgewählt sind, wobei der JOIN-Befehl eine Aktivierung aller auf die laufende Blockausführung wartenden Prozessoren bewirkt, der ELSE-Befehl eine Änderung der Ordnung der laufenden Blockausführung bewirkt, so daß der Block mit der niedrigsten Prioritätsordnungsnummer der nächste für die Ausführung ist, und der DATUM-Befehl eine Speicherung der Prioritätsordnungsnummern der nachfolgenden Blöcke bewirkt; und

während der zweiten Phase

(d) das Bewirken, daß eine während der ersten Phase verarbeitete SESE-Folge auf einem oder mehreren Prozessoren der SIMD-Maschine parallel verarbeitet wird; und das Bewirken der Bezeichnung der als nächste ausführbaren SESE-Folge als Funktion der Übereinstimmung oder Nichtübereinstimmung der SESE-Folgeziele der gerade auf einem oder mehreren Prozessoren in Ausführung befindlichen Zweige der Folge gemäß einer zweiten bestimmten Übereinkunft;

(e) bei Auftreten eines Zweig-Befehls das Ermitteln der Ziele und, wenn kein Ziel auf einen erfolgreichen bedingten Zweig vorhanden ist, das Übertragen der Steuerung auf das einzige Ziel, und sonst das Übertragen der Steuerung auf den erfolgreichen bedingten Zweig und Ausmaskieren der dem Ziel des nicht erfolgreichen bedingten Zweigs entsprechenden Prozessoren als inaktiv;

(f) bei Auftreten eines ELSE-Befehls in der laufenden SESE-Folge, wie sie auf die SIMD-Maschine gegeben wird, das Ermitteln der nächsten SESE-Zielfolge mit der niedrigsten Prioritätsordnungsnummer; das Einmaskieren eines jeden inaktiven Prozessors, welcher auf die Ausführung der ermittelten Ziel-SESE-Folge wartet, in einen aktiven Zustand; und das Ausmaskieren aller anderen Prozessoren, die auf die Ausführung anderer SESE-Folgen warten, in einen inaktiven Zustand; oder

(g) bei Auftreten eines JOIN-Befehls in der laufenden SESE-Folge, wie sie auf die SIMD-Maschine gegeben wird, das Einmaskieren derjenigen inaktiven Prozessoren, welche auf die Ausführung von SESE-Folgen mit der gleichen Prioritätsordnungsnummer wie die gerade durch die SIMD-Maschine in Ausführung befindliche SESE-Folge warten, in einen aktiven Zustand.

(MODIFICATIONS TO STOKES U.S. PAT. 4,101,960)

FIG. 1

INSERTION OF ELSE AND
JOIN IN BASIC BLOCK FLOWGRAPH

## FIG. 2

ENFORCED
PRIORITY ORDER

## FIG. 3

| 1 1 1 | ACTIVITY |
| A A A | ORDER<br>IP<br>CONDITION |

(1) INITIAL STATE

| 0 | 0 | 1 | ACTIVITY |
| 4 | 5 | | ORDER |
| b' | d' | D | IP |
| 0 | 0 | 0 | CONDITION |

(5) AFTER C

| 1 | 1 | 1 |
| 5 | 5 | 5 |
| F | F | F |
| 0 | 0 | 0 |

(9) AFTER d'

| 0 | 1 | 1 |
| 4 | | |
| b' | c | c |
| 0 | 1 | 1 |

(2) AFTER A

| 1 | 0 | 0 |
| 4 | 5 | 5 |
| b' | d' | d' |
| 0 | 0 | 0 |

(6) AFTER ELSE 5

| 1 | 1 | 1 |
| 6 | 6 | 6 |
| f' | f' | f' |
| 0 | 0 | 0 |

(10) AFTER ELSE 6

| 0 | 0 | 1 |
| 4 | 5 | |
| b' | d' | E |
| 0 | 0 | 1 |

(3) AFTER C

| 1 | 0 | 0 |
| 4 | 5 | 5 |
| D | d' | d' |
| 0 | 0 | 0 |

(7) AFTER b'

| 1 | 1 | 1 |
| 6 | 6 | 6 |
| | | |
| 0 | 0 | 0 |

(11) FINAL STATE

| 0 | 0 | 1 |
| 4 | 5 | |
| b' | d' | C |
| 0 | 0 | 1 |

(4) AFTER E

| 1 | 1 | 1 |
| 5 | 5 | 5 |
| d' | d' | d' |
| 0 | 0 | 0 |

(8) AFTER ELSE 5

FIG.4

INSTRUCTION EXECUTION CYCLE

FIG. 5

STEP 3:  X = ARG, Y = ORDER ; AND X = OTGT, Y = IP
STEP 11:  X = OTGT, Y = IP
STEP 12  X = 1TGT, Y = IP

UPDATE ACTIVE Y REGS FROM X

## FIG.6

STEPS 9 AND 10

## FIG.7

STEPS 5,8,AND 13
FIG.8

GIVEN A COMPARATOR

ONE FOR 2n IS PRODUCED AS FOLLOWS

FIG.9

min(X1,X2)    X1≤X2    X2≤X1

MCOMP(2)
FIG.10

6

INSERTION OF ELSE AND JOIN

BEFORE:

AFTER:

BASIC
BLOCK

PRIORTY ORDER

ADDRESS
0

A                    1                    A

BC  0 1

B                    4                    B   JOIN 4          b
                                                              b'
B

C                    2                    C

BC  0 1

D                    5                        ELSE 5         d
                                                              d'
B                                        D

E                    3                    E   ‾‾‾‾            e

BC  0      1                              E

F                    6                        ELSE 6         f
                                                              f'
                                         F

FIG.11